(19) **Europäisches Patentamt / European Patent Office / Office européen des brevets**

(11) **EP 3 093 384 B1**

(12) **EUROPEAN PATENT SPECIFICATION**

(45) Date of publication and mention
of the grant of the patent:
**15.08.2018 Bulletin 2018/33**

(51) Int Cl.:
*D06F 39/00* (2006.01)    *A47L 15/00* (2006.01)
*A47L 15/44* (2006.01)    *D06F 39/02* (2006.01)
*H04L 12/28* (2006.01)

(21) Application number: **16168478.2**

(22) Date of filing: **05.05.2016**

(54) **SYSTEM AND METHOD FOR REMOTE MANAGEMENT OF PIECES OF EQUIPMENT**

SYSTEM UND VERFAHREN ZUR FERNVERWALTUNG VON AUSRÜSTUNGSTEILEN

SYSTÈME ET PROCÉDÉ DE GESTION À DISTANCE DE PIÈCES D'ÉQUIPEMENT

<table>
<tr><td>

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.05.2015 IT UB20150353**

(43) Date of publication of application:
**16.11.2016 Bulletin 2016/46**

(73) Proprietor: **Maxicart SNC di Patrignani Augusto E
C.
47521 Cesena (IT)**

</td><td>

(72) Inventor: **PATRIGNANI, Augusto
47522 Cesena (IT)**

(74) Representative: **Roncuzzi, Davide
Roncuzzi & Associati S.r.l.
Via Antica Zecca, 6
48121 Ravenna (IT)**

(56) References cited:
**EP-A2- 1 186 694    DE-A1-102012 223 615
GB-A- 2 312 419    US-A1- 2007 000 291
US-A1- 2007 144 558**

</td></tr>
</table>

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Background to the invention

The present invention relates to the technical field of remote management of pieces of equipment. The present invention especially relates to the remote management of pieces of equipment, for example industrial pieces of equipment, via the telephone network or the Internet. Particularly, the present invention relates to a method and a system for the optimal management of the (ordinary and extraordinary) maintenance interventions for pieces of equipment, especially of washing pieces of equipment like industrial washing machines and/or dishwashers. In more detail, the present invention relates to a method and a system suitable to signal, in a reliable manner, the advisability of, and/or the need for, management and/or maintenance of pieces of equipment of the mentioned type.

## Prior art

Industrial washing pieces of equipment, like washing machines and/or dishwashers, are widely known and used for the outsourced wash of fabrics and/or dishes, for example of hotels, restaurants and/or the like, who want to outsource the wash and laundry service.

Said washing machines and/or dishwashers are owned by a main owner, who owns and manages more washing machines and/or dishwashers, that are, preferably but without limitation, hired for use by third parties, i.e. by laundry service providers.

In particular, according to the rules usually applied for the hire of goods, the main owner shall ensure the service and/or maintenance of the pieces of equipment hired by third parties, as well as the supply and sale, to the third parties, of all products necessary to use and operate the hired machines and/or pieces of equipment and/or the spare parts; specifically as regards washing machines, the main owner ensures the supply and/or sale of the washing liquids and/or the rinse agents to be used in the pieces of equipment or machines, once they are exhausted.

In particular, to ensure service and/or maintenance, two modes are usually applied: the third party, i.e. the hirer, notifies the main owner of the need for replenishment when one or more of the washing liquids is actually finished, and/or the main owner supplies said liquids to the hirer on a periodic basis. However, these commonly used modes for washing machine service and maintenance involve problems and/or drawbacks, that make the service and/or maintenance hard, difficult and often uselessly expensive.

For example, in case the main owner supplies the washing liquids on request of the user, delays may occur in the supply resulting in machine downtime, for example if the hirer communicates the need for replenishment at short notice (i.e. not long in advance with respect to the actual exhaustion of liquids) or communicates it only after the liquids are actually finished. Namely, in this case it is possible that the hirer's request for maintenance and/or liquid supply is contemporaneous with other urgent requests made by other users to the main owner; therefore, the owner could be not able to satisfy promptly all requests at the same time.

As regards periodic supply, especially periodic supply of washing liquids made regularly, i.e. independently of the actual consumption and/or exhaustion of the washing liquids, in this case again problems arise, different from those listed above for the supply on user's request but equally serious, for example the accumulation of washing liquids in excess at the user's premises, with consequent costs for purchase and/or storage.

Obviously, what described above also applies to the general management of washing machines, especially to the management of machine failures. In fact, it is clearly apparent that, when informed of a sudden failure, the main owner could be effectively unable to intervene immediately, with consequent downtime of the machines as in the case mentioned above. Moreover, the use of the pieces of equipment requires a periodic control and/or replacement of worn components of the machines; in this case again, if there is not a prompt communication about the parts to be maintained, controlled or replaced, undesired delays can occur, with consequent downtime; on the other hand, if periodic control and/or maintenance interventions have been planned, sometimes they could be unnecessary, with consequent unnecessary costs, and shall be therefore avoided.

The documents GB 2312419, US 2007/144558, DE 102012223615 and US 2007/000291 disclose prior art systems like those described above.

The general object of the present invention is to overcome or, at least, to minimize the problems described above resulting from the common modes currently used for the management of industrial pieces of equipment, especially of washing machines and/or dishwashers.

In particular, an object of the present invention is to allow the optimal remote management of service and/or maintenance interventions and/or supply of spare parts and/or of consumable products necessary to use the machines and/or equipment.

In more detail, an object of the present invention is to propose a new idea for the remote management of pieces of equipment like washing machines and/or dishwashers and/or industrial pieces of equipment in general, that allows the prompt signalling of the actual need for, and/or the advisability of, maintenance and/or service.

According to the present invention, in the specific case of washing machines and/or dishwashers, the communication of the need for, and/or the advisability of, service or maintenance is automatic, with no user's intervention. In more detail, according to the present invention the need for maintenance intervention is communicated automatically based on specific modes agreed between hirer, i.e. user, and main owner, wherein these modes ensure adequate advance with respect to the actual need for intervention, in order to avoid undesired delays in intervention, and therefore in failure repairing, and/or machine downtime. According to the present invention, in the specific case of washing machines and/or dishwashers, the main owner supplies washing liquids based on a communication automatically sent by the user to the main owner according to modes agreed between the main owner and the single user and approved by them.

## Description of the invention

A general consideration underlying the present invention is that it is possible to achieve the prior art objectives and to overcome, or at least to minimize, the prior art drawbacks thanks to a system and a related method or process, by means of which it is possible to communicate automatically the actual need for, and/or the advisability of, service and/or maintenance to a main owner. According to the present invention, there is the need for a service or maintenance intervention for a piece of equipment in case of failure thereof and/or in case of exhaustion of one or more products (for example washing liquids in case of washing machines and/or dishwashers) necessary for the use of the piece of equipment, whilst, according to the present invention, there is advisability of service or maintenance intervention independently of any failure and/or exhaustion of one or more products, and it is managed according to agreed methods. For example, there is advisability of replacement of, i.e. it could be advisable to replace a component, even if not failed, after a given number of working hours and, in the same way and again after a given time interval, it could be advisable to replenish one or more washing liquids, even if not yet exhausted. According to the present invention, the monitoring of the wear condition, and/or the correct operation, of components of a piece of equipment, as well as of the actual consumption of one or more products necessary for the operation of the piece of equipment, is not a duty of the user; indeed, they are performed automatically, wherein the communication about the need for, and/or the advisability of, a maintenance and/or service intervention is generated and sent automatically to the main owner based upon the monitoring results. For example, according to the present invention the system automatically monitors the washing liquid level in a washing machine or dishwasher, and, when a minimum level is achieved or, independently of the liquid level, a given agreed time has passed, the system alerts the main owner to the need for, or the advisability of, intervention, and the main owner can thus arrange and perform the required intervention.

According to the present inventions, alerts sent to the main owner from the "peripheral" users may be of different type and related to different intervention requests (necessary and/or advisable), as well as independent of one another or depending on one another. For instance, the request for intervention to replenish the washing liquids (independently of the actual liquid level, i.e. emitted according to an agreed plan, for instance after a given number of hours after the last replenishment) can depend on the number of operating cycles actually performed by the piece of equipment.

Based upon what described above, the object of the present invention is a system for remote control and management of at least one piece of equipment, wherein the use of said at least one piece of equipment involves the consumption of at least one liquid, and wherein at least one container or tank for said at least one liquid is associated with said piece of equipment, said system comprising at least one peripheral unit for collecting and transferring data, which comprises at least one sensor suitable to detect at least a given level of liquid in said at least one container, and an electronic operating unit connected to said at least one sensor and suitable to receive at least one signal, transmitted by said at least one sensor, concerning said at least one given level of liquid, wherein said system comprises a central unit remotely connected to said at least one peripheral unit, and wherein said at least one operating unit is so configured as to alert said central unit when it receives said at least one signal transmitted by said at least one sensor, the system further comprising the additional features as recited in claim 1.

According to an embodiment, said at least one operating unit may be so configured as to alert said central unit by means of a text message, the central unit comprising in this case at least one telephone terminal, or it may be so configured as to send email messages, the central unit comprising in this case at least one terminal accessing the web.

Advantageously, said operating unit may be so configured as to alert said central unit repeatedly at given intervals from the first alert, wherein, for example, the duration of the intervals progressively decreases according to a given scheme that can be varied at will from the first alert.

As the case may be, said peripheral unit may comprise further sensor units, each of which is suitable to detect one or more given parameters of said piece of equipment, and at least one storage unit suitable to store said parameters, said operating unit being, in this case, connected to said further sensor units and/or said storage unit and being so configured as to alert said central unit according to at least one of said parameters in addition to or depending on the alert generated when receives said signal transmitted by said liquid level sensor. According to an embodiment, said operating unit is so configured as to count the operating cycles of said piece of equipment, wherein said operating unit is so configured as to alert said central unit according to a given number of operating cycles independently of whether said signal emitted by said sensor has been received when said minimum liquid level has been achieved.

The operating cycles can be detected and counted, for example, according to the power absorption of said piece of equipment. Advantageously, at least one sensor unit may be suitable to verify the correct connection of the piece of equipment to the main supply of electricity, wherein each alert may depend on the correct connection of the piece of equipment to the main supply of electricity.

According to an embodiment, said operating unit may be so configured as to alert said central unit after a given period of correct connection of said piece of equipment to the main supply of electricity, independently of any other alert, and/or said operating unit can be remotely configured by means of said central unit.

According to an embodiment, said at least one peripheral unit may comprise at least two sensors, each of which is suitable to detect at least one given level of liquid in a corresponding container, said system being thus suitable to manage and/or to control a piece of equipment, whose use involves the consumption of two liquids, each of which is contained in a container or tank.

Obviously, the system according to the invention may comprise a plurality of peripheral units, each said peripheral unit being remotely connected to said central unit.

A further object of the present invention is an operating platform, said operating platform comprising one or more pieces of equipment, whose use involves the consumption of one or more liquids, and a system according to an embodiment of the present invention, wherein each peripheral unit of said system is dedicated only to one said piece of equipment, for example one or more washing pieces of equipment like washing machines and/or dishwashers, said platform being defined by claim 14. Any further embodiments of the system and/or method according to the invention are defined in the claims.

**Detailed description of the invention**

The invention will be better understood by the detailed description below of embodiments thereof, illustrated in the attached figures; however, the scope of the invention is obviously not limited by the embodiments illustrated in the figures and described below. In particular, in the drawing:

- figure 1 is a diagram of an example of system according to the invention;
- figure 2 is a diagram of an example of peripheral unit of a system according to the invention;
- figures 3a and 3b are block diagrams of an example of method and/or process according to the invention;
- figure 4 shows an example of a tank provided with a sensor unit used in a system according to the invention;
- figure 5 shows a detail of figure 4 in enlarged scale and with some parts removed for the sake of clarity.

The inventive system and method can be particularly advantageously applied for remote management of one or more washing machines and/or dishwashers, especially of the industrial type; for this reason, the examples of embodiment of the method and the system according to the present invention described herein apply to the remote management of industrial washing machines and/or dishwashers. However, it should be specified that the present invention can be applied not only to the case of industrial washing machines and/or dishwashers; on the contrary, the present invention can be also advantageously applied to remote management of pieces of equipment and/or machines, for example industrial, of different type.

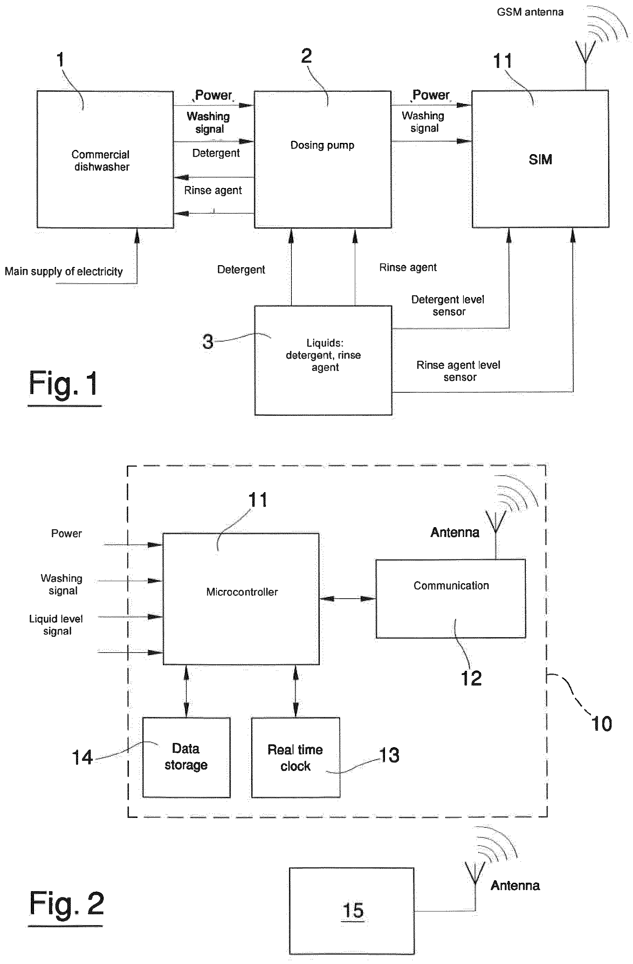

In figure 1, number 1 indicates, as a whole, a commercial or industrial dishwasher provided with a dosing pump 2, with which one or more tanks or containers 3 are associated (only one being shown in the figure) for one or more washing liquids, for instance a detergent liquid L and a rinse agent. The dosing pump 2 is operatively connected to both the washing machine 1 and the tanks 3 according to known methods, not described herein in greater detail. In particular, to perform a washing cycle the pump 2 is so activated as to take the washing liquid L from the corresponding tank 3 and to associate it or put it into the washing machine, based on the way the machine is structured. To this end, the washing machine is connected to the main supply of electricity, the dosing pump being thus electric-powered; in particular, to perform a washing cycle, an electric signal is sent from the dishwasher 1 to the pump 2, which takes the washing liquid from the tank 3 and puts it into the dishwasher 1 (to this end, see captions in the figure).

To each tank 3 a liquid level sensor 20 is dedicated, arranged inside the tank 3(see also the description below), each sensor 20 being part of a peripheral control unit and being especially connected to an operating unit 11, in particular a logic and/or electronic board, of the peripheral control unit. The operating unit 11 is also connected to the dosing pump 2 and, in general, to the dishwasher 1; in this way, it can monitor both the correct connection of the dishwasher 1 and the effective supply of electricity to the dosing pump; practically, when the dosing pump 2 absorbs electric power (that indicates the actual use of the dosing pump 2 and, therefore, a washing cycle of the dishwasher), a corresponding low voltage signal (12-25V direct current), also called herein "power supply signal", is sent to the operating unit 11, that registers the use of the pump and counts the progressive number of uses of the pump, i.e. the number of the washing cycles of the dishwasher 1.

An example of peripheral unit of the system according to the present invention will be described in detail below, with reference to figure 2, where parts with components and/or features of the system according to the invention already described above with reference to figure 1 are identified by the same reference numbers.

With particular reference to figure 2, the peripheral unit 10 comprises a microprocessor (operating unit) 11 connected to the sensors 3 (figure 1) and suitable to be connected to the dishwasher 1, namely to the dosing pump 2 of the dishwasher 1 as described above. In particular, the microprocessor 11 is a programmable microprocessor, in which the program routines for the peripheral unit 10 are stored, like, for example, the routines to detect the number of washing cycles, to update the progressive number of washing cycles, to detect the liquid level through one or more sensors, to receive, if necessary, new settings, as well as to send the parameters and data concerning the liquid level detected by the sensors. To this end, the microprocessor 11 is biunivocally connected to a communication module 12 provided, in particular, with an antenna, through which the communication module 12 (and therefore the peripheral unit 10) is remotely connected to a central control unit 15 (represented in figure 2 only by means of a rectangular element, for the sake of drawing simplicity). In particular, the communication module 12 may be equipped with a SIM card and be therefore connected with the central control unit 15 via the phone network, or it can be equipped with any other prior art known solutions that allow reciprocal communication between the communication module 12 and the central control and management unit 15 via the Internet network.

The connection between the module 12 and the microprocessor 11 also allows to send data and/or signals from the microprocessor 11 to the module 12, and, vice versa, to send setting parameters to the microprocessor 11 through the communication module.

The peripheral unit 10 comprises a "Real Time Clock" 13 that is configured as to allow the peripheral unit 10 to keep and update the hour and/or date for the automatic sending of signals and/or data and/or parameters, if necessary even if there is no power signal. Lastly, the peripheral unit 10 comprises a storage unit 14, suitable to store, for example, data concerning the number of washes and/or other parameters, if necessary even if there is no power signal.

Below there is a summarized example of operation of the system according to the present invention. Let's assume, for the sake of simplicity of description, that for the standard operation of the dishwasher 1 a single washing liquid is used, i.e. consumed, which is contained in a corresponding tank or container. Let's also assume that, when the liquid in the tank 3 achieves a minimum level (which has been agreed between the user of the dishwasher 1 and the main owner, based on information about the effective use of the dishwasher 1, like number, duration and frequency of the washing cycles, etcetera), the main owner shall be alerted so as to plan the intervention for the washing liquid replenishment, preferably before the complete exhaustion thereof that would result in forced and undesired downtime of the dishwasher 1. In this case, when said minimum liquid level has been achieved, the sensor inside the tank is activated (see description below) and the microprocessor 11 detects a corresponding signal and actuates the communication module 12. Then, the communication module 12 alerts the central control unit 15 of the main owner, for example through a text message sent via the phone network or an email message sent via the Internet network; to this end, the central unit 15 shall be provided with a telephone terminal or a terminal accessing the web, respectively. As it is clearly appreciable, the central control unit 15 (and therefore the main owner) is alerted automatically by the peripheral unit 10 according to the modes described above, without the need for intervention by the user of the dishwasher 1; namely, the monitoring, specifically the monitoring of the washing liquid level, and the alert to the central unit 15 are performed automatically by the peripheral unit 10. When the central control unit 15 receives the alert signal, the main owner can plan and perform the intervention for washing liquid replenishment (maintenance or assistance intervention "necessary" and/or resulting from an actual need).

If necessary, the operating unit (microprocessor 11) may be so configured as to alert said central unit 15 repeatedly at given intervals from the first alert, wherein the duration of the intervals progressively decreases according to a given scheme that can be varied at will from the first alert.

As mentioned above, with the system according to the present invention it is possible to monitor not only the washing liquid levels in the various tanks or containers, but also components of the washing machine (for instance components subject to wear) and/or various operating parameters of the washing machine, and to alert the operating central consequently, as well as to subordinate the various alert signals according to modes specifically agreed and approved for each user. For example, further sensor units may be provided, respectively dedicated to components of the dishwasher and so configured as to be activated in case of failure and to send corresponding signals to the microprocessor 11, which will then activate the communication module 12 so that a corresponding alert signal will be sent to the central control unit 15. In this case, the alert signals can be priority, and be therefore sent independently of the actual status of different parameters, especially independently of the actual washing liquid level. Similarly, further sensor units may be dedicated to the monitoring of the correct connection of the dishwasher 1, in particular of the washing or dosing pump 2, to the main supply of electricity, wherein, in this case, the alert signals for the liquid replenishment may depend, if necessary, on the verification of the correct connection of the dishwasher 1 and/or the dosing pump 2 to the main supply of electricity. Moreover, an alert signal may be emitted for preventive replacement of components of the dishwasher 1 and/or of washing liquids, in particular after a given number of working hours of said components and, respectively, the maximum validity of the washing liquids. Namely, after a given number of hours, the washing liquids, even if not used, may lose their detergent properties and shall be replaced to ensure the desired washing efficiency of dishwasher. In these cases, when alerting the central unit 15 it is possible to ask for the replacement of components and/or washing liquids (preventive maintenance interventions considered advisable and required by means of corresponding alert signals, if necessary depending on different alert signals or independently of them). Obviously, the same also applies for washing machines and other wash machines using liquid detergents.

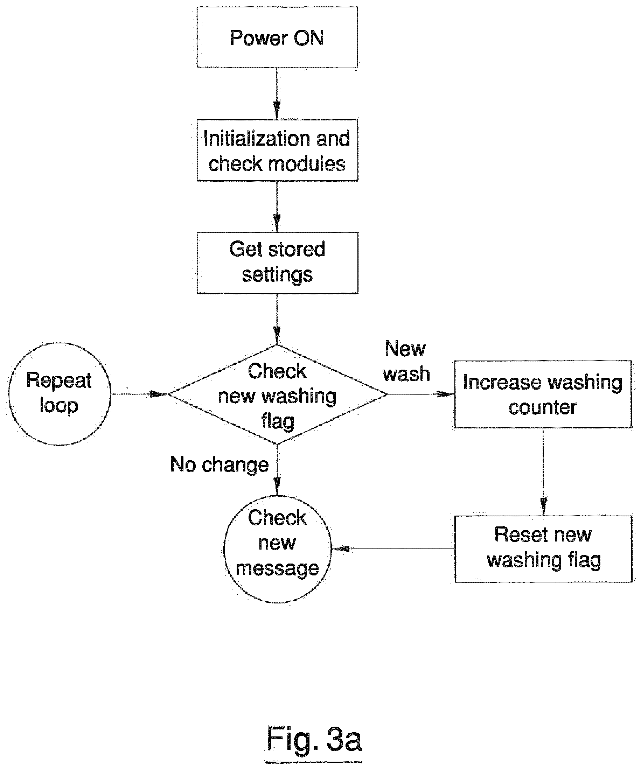

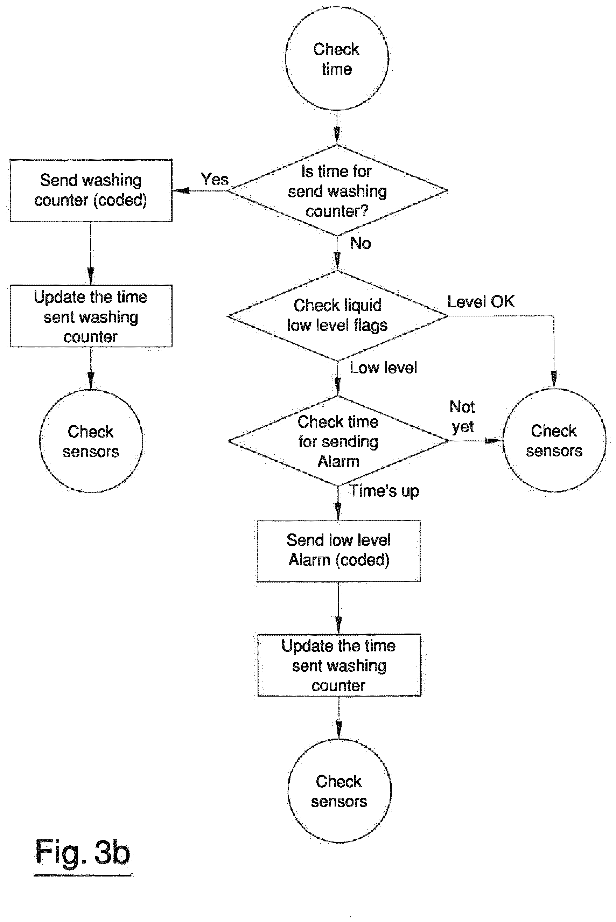

Further examples of operation of the system according to the invention will be described below with reference to figures 3a and 3b.

Figure 3a refers, in particular, to the case where the central unit 15 asks the peripheral unit 10 for an update of a parameter of the piece of equipment, in this case the total number of washes, counted from a given moment, for example from the start-up of the piece of equipment or from the last update.

As shown in figure 3a, the peripheral unit 10 comprises a "check time" module usable to send the messages repeatedly, until they are actually received by the central unit 15. Moreover, it should be specified that with each sent message a piece of information is associated concerning the message sending time, establishing a biunivocal relation between the pieces of information contained in the message and the time. Starting the routine, firstly the check is performed of whether a new wash has been done, for example deriving the piece of information from the operation of the pump (through the corresponding sensor). In case a new wash has been done, a storage unit is updated and the module "Check New Message Command" is activated to verify whether at least one request for update has been received concerning the parameter (through a message from the central unit 15 to the peripheral unit). In case a request for update has been received, the storage unit is read and the message containing the update is sent by the peripheral unit 10 to the central unit 15. Obviously, it is also possible e reverse communication, i.e. the central unit 15, through messages, may ask the peripheral unit 10 to set adequate parameters of the piece of equipment and/or to update the storage unit.

Non-limiting examples of the information that can be required are: status of level of the sensor/liquid, washing counter, internal hour, intervals for sending of the messages, margin day for the replenishment, etcetera.

Figure 3b relates to the case where the peripheral unit 10 "spontaneously" sends a message concerning a parameter of the piece of equipment, in this case an alarm when the minimum level of one or more washing liquids has been achieved.

Namely, in this case the level of one or more washing liquids is monitored by means of one or more level sensors (see description below) and, when the set minimum level has been achieved, the peripheral unit 10 alerts the central unit 15, sending it a message. In this case again, the message can be sent repeatedly at given intervals, until it has been actually received (and confirmed) by the central unit 15 and/or until the liquid has been actually replenished.

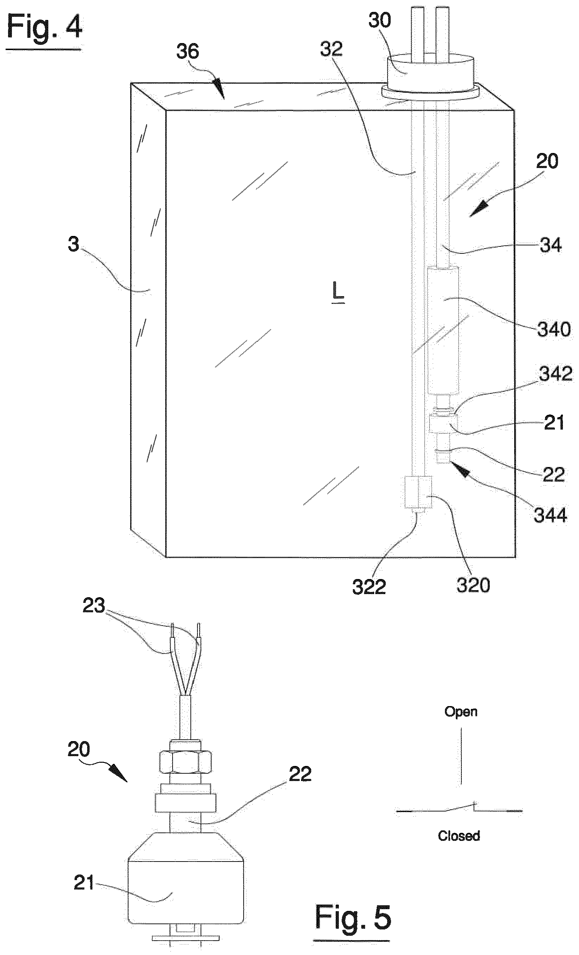

Figure 4 shows an example of a liquid level sensor 20 usable in the system according to the invention.

A feature of the sensor 20 shown in figure 4 is that it is so configured as to be positioned inside a tank 3, especially fixed to the lid 30 of the tank 3 in vertical position with respect to the surface of the liquid L inside the tank 3.

In particular, according to this configuration the lid 30 is crossed by two flexible tubes 32 and 34, one of which is suitable to take liquid from the tank and the other one is suitable to support the sensor 20 for measuring the level of the liquid L contained in the tank 3. It should be noted that the tank 3 may be also installed with the wall 36 carrying the lid 30 directed horizontally or vertically indifferently, according to the type of installation. For the sake of drawing economy, figure 4 shows only the installation wherein the tank 3 has the wall 36 arranged horizontally. To this end, to each tube 32 and 34 a mass is associated of greater density than that of the liquid L to maintain the end portion thereof substantially vertically, i.e. directed towards the bottom of the tank 3 and immersed in the liquid. The tube 32 is longer than the other tube and has a mass 320 associated with its end portion 322, whilst the other tube 34 carries an elongated mass 340 in intermediate position and a floating micro-switch 342, better shown in figure 5, in the respective end portion 344. The micro-switch 342 comprises a floating element 21 freely coaxially coupled to an elongated guide member 22, for example made of metal. The floating element 21 is free to move along the guide member 22 so that, when immersed in the liquid, it is thrusted upwards, whilst, when a given minimum level of liquid has been achieved inside the tank 3, it can move downwards, wherein the downward movement of the floating element 21 involves the closing of an electric circuit (see the wiring diagram of figure 5) and thus the emission of a signal received by the microprocessor 11.

From this moment, and until the replenishment, the floating element 21, that is magnetized, electromagnetically interacts with the metal guide member 22 through electric cables 23, so as to update consequently the corresponding logic variable of the storage unit, so as to inform in real time that the liquid in the tank is still finished and shall be replenished.

It is therefore possible to set the minimum level of liquid, in correspondence of which the corresponding alert signal is generated, individually for each user and based on the actual consumption of liquid of each user. In particular, in case of high daily consumptions of liquid, it should be advisable to alert the control unit well in advance with respect to the forecasted total exhaustion of liquid (and therefore to position the sensor at a greater height in the tank); on the contrary, in case of not high daily consumptions, it is sufficient to alert the control unit just before the total exhaustion of the liquid (and therefore to position the sensor at a lower height in the tank).

For the sake of completeness of the description, below there is an example of calculation of the sensor positioning height.

$$\text{Height} = (\text{Overall height}) - \frac{\text{Average consumption} \times \text{Margin days} \times \text{Overall height}}{\text{Total weight of the container}}$$

Wherein the indicated parameters shall be interpreted according to the following:

Height = distance from the lid where the sensor will be installed [cm];
Average consumption = [kg/days];
Margin days = days necessary for the replenishment [days]; Overall height = the overall height of the container in the position where it is installed (both vertical and horizontal) [cm] ;
Total weight of the container = the total weight of full container [kg].

The detailed description above of embodiments of the system and the method according to the invention illustrated in the drawing has proven that the invention allows to achieve the objects and/or at least to overcome or minimize the prior art drawbacks.

In particular, the present invention allows the optimal remote management of service and/or maintenance interventions and/or supply of spare parts and/or of consumable products necessary to use the machines and/or pieces of equipment.

In more detail, the present invention allows to signal promptly the actual need for, and/or the advisability of, maintenance and/or service interventions, without any action by the user. Moreover, the communication of the need for, and/or the advisability of, maintenance intervention may be automatic based on specific modes agreed between each user and the main owner, anyway with adequate advance with respect to the actual need for intervention, in order to avoid undesired delays in failure repairing and/or machine downtime.

According to the present invention, in the specific case of washing machines and/or dishwashers, the main owner may supply washing liquids based on a preventive communication sent automatically by the user to the main owner according to modes agreed between the main owner and the each user and approved by them.

The invention has been explained by the detailed description of embodiments thereof, illustrated in the attached figures; however, the scope of the invention is obviously not limited by the embodiments illustrated in the figures and described above; on the contrary, all variants of embodiments, described and represented in the drawing, that will be clearly apparent to those skilled in the art from the description above, fall within the scope of the present invention.

For example, the use of different sensors than those described, for instance optical sensors or the like, falls within the scope of the invention.

Moreover, the criteria for the priority of the alert signals may vary according to the needs and/or the circumstances and it will be also possible to couple light signals and/or acoustic signals to the alert signals described herein (text messages or emails). Moreover, the system and the method according to the present invention can be applied not only to the washing machines and/or the dishwashers of the commercial or industrial types, but can be apply to all cases of remote management of commercial and/or industrial pieces of equipment.

For example, according to an embodiment, the peripheral unit 10 and the central unit 15 may communicate together by means of text messages, in particular both for the reading of data or parameters (messages from the peripheral unit 10 to the central unit) and for the configuration of the inner parameters (messages from the central unit 15 to the peripheral unit).

According to an embodiment, the message may be structured as follows:

```
ID  |  R/W  |  OpCode  |  Value  |  [C]  |  [M]

(5 max) |     (1)      |           (2)        |      (10
             max)  |    [1]   |      [1]
```

maximum length of the message equal to 20 characters, wherein the single lengths of each part of the string are indicated in brackets.

**\*) ID:**

Length (variable): max 5 (numeric) characters
It is the ID number of the (peripheral and/or central) unit. It is a unique value assigned and set during the initial setting. It can be modified only by means of setting.
The function thereof in the string is to validate the text messages with instructions and then it also serves as a password for the confirmation of the unit authenticity. In case the provided ID number is different than the internal number, the message is automatically ignored (except in the special case of ID requirement, see list below).

**\*) R/W:**

Length (fixed): 1 character (alphabetic, case-insensitive).
It can take two values, allowing to diversify the types of operations on the characters:
**R:** Operation of enquire/read of the value of a parameter. To this kind of message the peripheral unit answers with a text message (sent to the number set as Server Phone Number) with the value required.
With the optional flag [M] (see the description below) the answer will be in Machine mode, otherwise in Human mode.
**W:** Operation of configuration/write of a parameter.

**\*) OpCode:**

Length (fixed): 2 characters (numeric).
It represents the specific parameter on which the operation shall be done.
It can be a decimal value from 00 to 99. The number shall be always comprised of two digits. For numbers from 0 to 9, it is mandatory to insert a 0 before the digit, i.e. 00-09.

**\*) Value:**

Length (variable): max 10 (numeric) characters
This is the value to set on the specified parameter.
In case of Read operation, it will be automatically ignored (until the characters will be only numerical).

**\*) [C]:**

Length (variable): 1 character (alphabetic, case-insensitive, optional).
It represents the flag "Confirm": request for confirmation of correct configuration by means of an answering text message with the new set parameter (see R/W),
**[0073]** It is optional.

**\*) [M]:**

Length (variable): 1 character (alphabetic, case-insensitive, optional).
It represents the flag "Machine": if inserted, the answering text message will be sent in Machine mode (automatically).
It is optional.
The units may answer according to two modes: Human (default) or Machine.
In the first case, the answer may contain words, for instance: "Washing counter = 456".
In the second case, the answer use the same inner coding for the parameters, so as to simplify the programming of a SMS gateway for automatic management.
Below there is a list, given just by way of non-limiting example, of the parameters and/or values that can be managed through the system according to the invention (in the specific case the system is applied to a washing machine or piece of equipment).

| |
|---|
| Washing counter (pump 1-2) |
| Detergent level (pump 1-2) *(Read only)* |
| Rinse agent level (pump 1-2) *(Read only)* |

(continued)

| Date of last washing (log) (pump 1-2) |
| --- |
| Date and time of the last sending of the Washing Counter (Pump 1-2) [unixtime] |
| Date and time of the last sending of the Alarm Detergent (Pump 1-2) [unixtime] |
| Date and time of the last sending of the Alarm Rinse Agent (Pump 1-2) [unixtime] |
| Interval for automatic sending of Washing Counter (Pump 1-2) [seconds] |
| Interval for automatic sending of Alarm Detergent (Pump 1-2) [seconds] |
| Interval for automatic sending of Alarm Rinse Agent (Pump 1-2) [seconds] |
| Configuration signal from the pump (Pump 1-2) [seconds] |
| Date and time of the inner clock *(For Write use unixtime)* |
| Telephone number of the text message server |
| ID number *(Read only)* |

The scope of the present invention is defined by the appended claims.

**Claims**

1. System for remote control and management of at least one piece of equipment (1), wherein the use of said at least one piece of equipment (1) involves the consumption of at least one liquid (L), and wherein at least one container or tank (3) for said at least one liquid is associated with said piece of equipment, said system comprising at least one peripheral unit (10) for collecting and transferring data, which comprises at least one sensor (20) suitable to detect at least a given level of liquid in said at least one container (3), and an electronic operating unit (11) connected to said at least one sensor (20) and suitable to receive at least one signal, transmitted by said at least one sensor (20), concerning said at least one given level of liquid, wherein said system comprises a central unit (15) remotely connected to said at least one peripheral unit (10), and wherein said at least one operating unit (11) is so configured as to alert said central unit when it receives said at least one signal transmitted by said at least one sensor (20), wherein said peripheral unit (10) comprises further sensor units, each of which is suitable to detect one or more given parameters of said piece of equipment (1), and at least one storage unit (14) suitable to store said parameters, said operating unit (11) being connected to said further sensor units and/or said storage unit (14) and being so configured as to alert said central unit (15) according to at least one of said parameters in addition to or depending on the alert generated when receives said signal transmitted by said liquid level sensor and **characterised in that** said operating unit (11) is so configured as to count the operating cycles of said piece of equipment (1) and wherein said operating unit (11) is so configured as to alert said central unit (15) according to a given number of operating cycles independently of whether said signal emitted by said sensor has been received when said minimum liquid level has been achieved.

2. System according to claim 1, wherein the operating cycles are detected and counted according to the power absorption of said piece of equipment (1).

3. System according to one of claims from 1 to 2, wherein at least one of said sensor units is suitable to verify the correct connection of the piece of equipment (1) to the main supply of electricity and wherein each alert depends on the correct connection of the piece of equipment (1) to the main supply of electricity.

4. System according to one of claims from 1 to 3, wherein said operating unit (11) is so configured as to alert said central unit (15) after a given period of correct connection of said piece of equipment (1) to the main supply of electricity, independently of any other alert.

5. System according to one of claims from 1 to 4, wherein said operating unit (11) can be remotely configured by means of said central unit (15).

6. System according to one of claims from 1 to 5, wherein said at least one peripheral unit (10) comprises at least two sensors, each of which is suitable to detect at least one given level of liquid in a corresponding container (3), said system being thus suitable to manage and/or to control a piece of equipment (1) whose use involves the consumption of two liquids, each of which is contained in a container or tank (3).

7. System according to one of claims from 1 to 6, wherein said system comprises a plurality of peripheral units (10) according to one of claims from 1 to 6, each said peripheral unit (10) being remotely connected to said central unit (15).

8. System according to any one of the previous claims, **characterized in that** said tank (3) is closed by means of a lid (30); said lid (30) being crossed by a first and a second tubes (32) (34), the first of which is suitable to take said liquid (L) from said tank (3) and the second of which is suitable to support said sensor (20).

9. System according to claim 8, **characterized in that** to each said first tube (32) and second tube (34) a mass is associated of greater density than that of said liquid (L) to maintain the end portion thereof directed towards a bottom of said tank (3) independently of how this tank is arranged; said second tube (34) carrying a micro-switch (342) in a respective end portion (344); said micro-switch (342) comprising a floating element (21) freely coaxially coupled to an elongated guide member (22); said floating element (21) being free to move along said guide member (22) under the thrust of said liquid (L).

10. System according to one claims from 1 to 9, wherein said at least one operating unit (11) is so configured as to alert said central unit (15) by means of a text message, the central unit (15) comprising in this case at least one telephone terminal.

11. System according to one claims from 1 to 10, wherein said at least one operating unit (11) is so configured as to alert said central unit (15) by means of an email message, the central unit (15) comprising in this case at least one terminal accessing the web.

12. System according to one of claims from 1 to 11, wherein said operating unit (11) is so configured as to alert said central unit (15) repeatedly at given intervals from the first alert.

13. System according to claim 12, wherein the duration of said intervals progressively decreases according to a given scheme that can be varied at will from the first alert.

14. Operating platform, said operating platform comprising one or more pieces of equipment (1), whose use involves the consumption of one or more liquids, and a system according to one of claims from 1 to 13, wherein each peripheral unit (10) of said system is dedicated only to one said piece of equipment (1).

15. Platform according to claim 14, wherein said one or more pieces of equipment are washing equipment like washing machines and/or dishwashers.

**Patentansprüche**

1. System zur Fernsteuerung und -verwaltung von mindestens einem Ausrüstungsteil (1), wobei die Verwendung des mindestens einen Ausrüstungsteils (1) den Verbrauch von mindestens einer Flüssigkeit (L) betrifft und wobei mindestens ein Behälter oder Tank (3) für die mindestens eine Flüssigkeit mit dem Ausrüstungsteil verknüpft ist, wobei das System mindestens eine Peripherieeinheit (10) zum Sammeln und Übermitteln von Daten, die mindestens einen Sensor (20) umfasst, der geeignet ist, mindestens einen gegebenen Flüssigkeitsstand in dem mindestens einen Behälter (3) zu detektieren, und eine elektronische Betriebseinheit (11) umfasst, die mit dem mindestens einen Sensor (20) verbunden ist und geeignet, mindestens ein Signal zu empfangen, das von dem mindestens einen Sensor (20) übertragen wird und sich auf den mindestens einen gegebenen Flüssigkeitsstand bezieht, wobei das System eine Zentraleinheit (15) umfasst, die mit der mindestens einen Peripherieeinheit (10) fernverbunden ist, und wobei die mindestens eine Betriebseinheit (11) dazu ausgelegt ist, die Zentraleinheit zu alarmieren, wenn sie das mindestens eine Signal empfängt, das von dem mindestens einen Sensor (20) übertragen wird, wobei die Peripherieeinheit (10) weitere Sensoreinheiten, von denen jede geeignet ist, einen oder mehrere gegebene Parameter des Ausrüstungsteils (1) zu detektieren, und mindestens eine Speichereinheit (14), die geeignet ist, die Parameter zu speichern, umfasst, wobei die Betriebseinheit (11) mit den weiteren Sensoreinheiten und/oder der Speichereinheit (14) verbunden ist und dazu ausgelegt, die Zentraleinheit (15) gemäß mindestens einem von den Parametern zu alarmieren, zusätzlich zu oder in Abhängigkeit von dem Alarm, der erzeugt wird, wenn das Signal empfängt, das vom Flüssigkeitsstandsensor übertragen wird, und **dadurch gekennzeichnet, dass** die Betriebseinheit (11) dazu ausgelegt ist, die Betriebszyklen des Ausrüstungsteils (1) zu zählen, und wobei die Betriebseinheit (11) dazu ausgelegt ist, die Zentraleinheit (15) gemäß einer gegebenen Anzahl von Betriebszyklen unabhängig davon zu alarmieren, ob das Signal, das vom Sensor emittiert wurde, empfangen wurde, wenn der minimale Flüssigkeitsstand erreicht wurde.

2. System nach Anspruch 1, wobei die Betriebszyklen gemäß der Leistungsabsorption des Ausrüstungsteils (1) detektiert und gezählt werden.

3. System nach einem der Ansprüche 1 bis 2, wobei mindestens eine der Sensoreinheiten geeignet ist, die richtige Verbindung des Ausrüstungsteils (1) mit der Elektrizitätshauptversorgung zu verifizieren, und wobei jeder Alarm von der richtigen Verbindung des Ausrüstungsteils (1) mit der Elektrizitätshauptversorgung abhängig ist.

4. System nach einem der Ansprüche 1 bis 3, wobei die Betriebseinheit (11) dazu ausgelegt ist, die Zentraleinheit (15) nach einer gegebenen Periode einer richtigen Verbindung des Ausrüstungsteils (1) mit der Elektrizitätshauptversorgung unabhängig von jedem anderen Alarm zu alarmieren.

5. System nach einem der Ansprüche 1 bis 4, wobei die Betriebseinheit (11) mittels der Zentraleinheit (15) aus der Ferne ausgelegt werden kann.

6. System nach einem der Ansprüche 1 bis 5, wobei die mindestens eine Peripherieeinheit (10) mindestens zwei Sensoren umfasst, von denen jeder geeignet ist, mindestens einen gegebenen Flüssigkeitsstand in einem entsprechenden Behälter (3) zu detektieren, wobei das System daher geeignet ist, ein Ausrüstungsteil (1), dessen Verwendung den Verbrauch von zwei Flüssigkeiten betrifft, von denen jede in einem Behälter oder Tank (3) enthalten ist, zu verwalten und/oder zu steuern.

7. System nach einem der Ansprüche 1 bis 6, wobei das System eine Vielzahl von Peripherieeinheiten (10) nach einem der Ansprüche 1 bis 6 umfasst, wobei jede Peripherieeinheit (10) mit der Zentraleinheit (15) fernverbunden ist.

8. System nach einem der vorhergehenden Ansprüche, **dadurch gekennzeichnet, dass** der Tank (3) mittels eines Deckels (30) geschlossen ist; wobei der Deckel (30) von einem ersten und einem zweiten Rohr (32) (34) durchquert wird, von denen das erste geeignet ist, die Flüssigkeit (L) vom Tank (3) aufzunehmen, und von denen das zweite geeignet ist, den Sensor (20) zu unterstützen.

9. System nach Anspruch 8, **dadurch gekennzeichnet, dass** mit jedem des ersten Rohres (32) und des zweiten Rohres (34) eine Masse von größerer Dichte als die der Flüssigkeit (L) verknüpft ist, um den Endabschnitt davon zu einem Boden des Tanks (3) gerichtet zu halten, unabhängig davon, wie dieser Tank angeordnet ist; wobei das zweite Rohr (34) einen Mikroschalter (342) in einem jeweiligen Endabschnitt (344) trägt; wobei der Mikroschalter (342) ein Schwimmelement (21) umfasst, das frei koaxial an eine längliche Führungskomponente (22) gekoppelt ist; wobei das Schwimmelement (21) frei ist, sich unter dem Schub der Flüssigkeit (L) entlang der Führungskomponente (22) zu bewegen.

10. System nach einem der Ansprüche 1 bis 9, wobei die mindestens eine Betriebseinheit (11) dazu ausgelegt ist, die Zentraleinheit (15) mittels einer Textnachricht zu alarmieren, wobei die Zentraleinheit (15) in diesem Fall mindestens ein Telefonendgerät umfasst.

11. System nach einem der Ansprüche 1 bis 10, wobei die mindestens eine Betriebseinheit (11) dazu ausgelegt ist, die Zentraleinheit (15) mittels einer E-Mail-Nachricht zu alarmieren, wobei die Zentraleinheit (15) in diesem Fall mindestens ein Endgerät umfasst, das auf das Web zugreift.

12. System nach einem der Ansprüche 1 bis 11, wobei die Betriebseinheit (11) dazu ausgelegt ist, die Zentraleinheit (15) ab dem ersten Alarm in gegebenen Intervallen wiederholt zu alarmieren.

13. System nach Anspruch 12, wobei die Dauer der Intervalle gemäß einem gegebenen Schema, das nach Bedarf variiert werden kann, ab dem ersten Alarm progressiv verringert wird.

14. Betriebsplattform, wobei die Betriebsplattform ein oder mehrere Ausrüstungsteile (1), deren Verwendung den Verbrauch von einer oder mehreren Flüssigkeiten betrifft, und ein System nach einem der Ansprüche 1 bis 13 umfasst, wobei jede Peripherieeinheit (10) des Systems nur einem Ausrüstungsteile (1) zugeordnet ist.

15. Plattform nach Anspruch 14, wobei das eine oder die mehreren Ausrüstungsteile eine Waschausrüstung wie Waschmaschinen und/oder Geschirrspüler sind.

**Revendications**

1. Système de gestion et de commande à distance d'au moins une pièce d'équipement (1), l'utilisation de ladite au moins une pièce d'équipement (1) impliquant la consommation d'au moins un liquide (L), et au moins un contenant ou réservoir (3) pour ledit au moins un liquide étant associé à ladite pièce d'équipement, ledit système comprenant au moins une unité périphérique (10) pour collecter et transférer des données, qui comprend au moins un capteur (20) apte à détecter au moins un niveau donné de liquide dans ledit au moins un contenant (3), et une unité d'exploitation électronique (11) connectée audit au moins un capteur (20) et apte à recevoir au moins un signal, émis par ledit au moins un capteur (20), se rapportant audit au moins un niveau donné de liquide, ledit système comprenant une unité centrale (15) connectée à distance à ladite au moins une unité périphérique (10), et ladite au moins une unité d'exploitation (11) étant configurée de manière à alerter ladite unité centrale lorsqu'elle reçoit ledit au moins un signal émis par ledit au moins un capteur (20), ladite unité périphérique (10) comprenant d'autres unités de capteur, chacune desquelles étant apte à détecter un ou plusieurs paramètres donnés de ladite pièce d'équipement (1), et au moins une unité de stockage (14) apte à stocker lesdits paramètres, ladite unité d'exploitation (11) étant connectée auxdites autres unités de capteur et/ou à ladite unité de stockage (14) et étant configurée de manière à alerter ladite unité centrale (15) selon au moins un desdits paramètres en plus ou en fonction de l'alerte générée lorsqu'elle reçoit ledit signal émis par ledit capteur de niveau de liquide, et **caractérisé par le fait que** ladite unité d'exploitation (11) est configurée de manière à compter les cycles d'exploitation de ladite pièce d'équipement (1), et ladite unité d'exploitation (11) étant configurée de manière à alerter ladite unité centrale (15) selon un nombre donné de cycles d'exploitation indépendamment du fait que ledit signal émis par ledit capteur a été reçu lorsque ledit niveau minimal de liquide a été atteint.

2. Système selon la revendication 1, dans lequel les cycles d'exploitation sont détectés et comptés selon l'absorption de puissance de ladite pièce d'équipement (1).

3. Système selon l'une des revendications 1 et 2, dans lequel au moins une desdites unités de capteur est apte à vérifier la bonne connexion de la pièce d'équipement (1) à l'alimentation électrique principale, et chaque alerte dépendant de la bonne connexion de la pièce d'équipement (1) à l'alimentation électrique principale.

4. Système selon l'une des revendications 1 à 3, dans lequel ladite unité d'exploitation (11) est configurée de manière à alerter ladite unité centrale (15) après une période donnée de bonne connexion de ladite pièce d'équipement (1) à l'alimentation électrique principale, indépendamment de tout autre alerte.

5. Système selon l'une des revendications 1 à 4, dans lequel ladite unité d'exploitation (11) peut être configurée à distance au moyen de ladite unité centrale (15) .

6. Système selon l'une des revendications 1 à 5, dans lequel ladite au moins une unité périphérique (10) comprend au moins deux capteurs, chacun desquels étant apte à détecter au moins un niveau donné de liquide dans un contenant correspondant (3), ledit système étant ainsi apte à gérer et/ou commander une pièce d'équipement (1) dont l'utilisation implique la consommation de deux liquides, chacun desquels étant contenu dans un contenant ou réservoir (3).

7. Système selon l'une des revendications 1 à 6, dans lequel ledit système comprend une pluralité d'unités périphériques (10) selon l'une des revendications 1 à 6, chaque unité périphérique (10) étant connectée à distance à ladite unité centrale (15).

8. Système selon l'une quelconque des revendications précédentes, **caractérisé par le fait que** ledit réservoir (3) est fermé au moyen d'un couvercle (30) ; ledit couvercle (30) étant traversé par des premier et second tubes (32) (34), dont le premier est apte à extraire ledit liquide (L) dudit réservoir (3) et dont le second est apte à supporter ledit capteur (20).

9. Système selon la revendication 8, **caractérisé par le fait qu'**à chacun desdits premier tube (32) et second tube (34) est associée une masse d'une densité supérieure à celle dudit liquide (L) pour maintenir sa partie d'extrémité dirigée vers un fond dudit réservoir (3) indépendamment de la manière dont ce réservoir est disposée ; ledit second tube (34) portant un micro-commutateur (342) dans une partie d'extrémité respective (344) ; ledit micro-commutateur (342) comprenant un élément flottant (21) couplé librement et coaxialement à un élément de guidage allongé (22) ; ledit élément flottant (21) étant libre de se déplacer le long dudit élément de guidage (22) sous la poussée dudit liquide (L).

10. Système selon l'une des revendications 1 à 9, dans lequel ladite au moins une unité d'exploitation (11) est configurée de manière à alerter ladite unité centrale (15) au moyen d'un message de texte, l'unité centrale (15) comprenant, dans ce cas, au moins un terminal de téléphone.

11. Système selon l'une des revendications 1 à 10, dans lequel ladite au moins une unité d'exploitation (11) est configurée de manière à alerter ladite unité centrale (15) au moyen d'un courrier électronique, l'unité centrale (15) comprenant, dans ce cas, au moins un terminal d'accès au Web.

12. Système selon l'une des revendications 1 à 11, dans lequel ladite unité d'exploitation (11) est configurée de manière à alerter ladite unité centrale (15) de manière répétée à intervalles donnés à partir de la première alerte.

13. Système selon la revendication 12, dans lequel la durée desdits intervalles diminue progressivement selon un schéma donné qui peut être varié à volonté à partir de la première alerte.

14. Plate-forme d'exploitation, ladite plate-forme d'exploitation comprenant une ou plusieurs pièces d'équipement (1), dont l'utilisation implique la consommation d'un ou plusieurs liquides, et un système selon l'une des revendications 1 à 13, chaque unité périphérique (10) dudit système étant dédiée uniquement à une pièce d'équipement précitée (1).

15. Plate-forme selon la revendication 14, dans laquelle ladite ou lesdites pièces d'équipement sont des équipements de lavage, tels que des machines à laver et/ou des lave-vaisselles.

Fig. 1

Fig. 2

14

Power ON

Initialization and
check modules

Get stored
settings

Repeat
loop

Check
new washing
flag

New
wash

Increase washing
counter

No change

Check
new
message

Reset new
washing flag

Fig. 3a

Fig. 3b

## Fig. 4

36

32

30

3

20

34

L

340

342

21

22

344

322    320

23

20

22

21

Open

Closed

## Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2312419 A
- US 2007144558 A
- DE 102012223615
- US 2007000291 A